(19) Europäisches Patentamt

European Patent Office

Office européen des brevets

(11) Veröffentlichungsnummer: **0 306 668 B1**

(12) **EUROPÄISCHE PATENTSCHRIFT**

(45) Veröffentlichungstag der Patentschrift:
29.05.91 Patentblatt 91/22

(51) Int. Cl.⁵: **G01M 1/24**

(21) Anmeldenummer: 88111526.5

(22) Anmeldetag: 18.07.88

(54) **Anfahrvorrichtung zum Messen von Unwuchten an Rotoren.**

(30) Priorität: 08.09.87 DE 3730083

(43) Veröffentlichungstag der Anmeldung:
15.03.89 Patentblatt 89/11

(45) Bekanntmachung des Hinweises auf die
Patenterteilung:
29.05.91 Patentblatt 91/22

(84) Benannte Vertragsstaaten:
ES FR GB IT

(56) Entgegenhaltungen:
GB-A- 1 495 913
SOVIET INVENTIONS ILLUSTRATED, Sektion
Elektrik, Woche C46, 31. Dezember 1980, Zusammenfassungsnr. SO2, LO565, Derwent Publications Ltd., London, GB; & SU 664 460

(73) Patentinhaber: HOFMANN
WERKSTATT-TECHNIK GMBH
Werner-von-Siemens-Strasse 2
W-6102 Pfungstadt (DE)

(72) Erfinder: Rothamel, Karl
Wittmannstrasse 43
W-6100 Darmstadt (DE)

(74) Vertreter: Nöth, Heinz, Dipl.-Phys. et al
Patentanwälte Pfenning, Meinig & Partner
Mozartstrasse 17
W-8000 München 2 (DE)

## Beschreibung

Die Erfindung betrifft eine Vorrichtung zum Messen von Unwuchten an Rotoren nach dem Oberbegriff des Anspruchs 1.

Bei derartigen Unwuchtmeßvorrichtungen an Auswuchtmaschinen, bei welchen der auszuwuchtende Rotor mit Hilfe einer solchen Spanneinrichtung an der Hauptwelle befestigt ist, bei welcher mittels Haftreibung das Antriebsdrehmoment auf den zu messenden Rotor, welcher insbesondere ein Kraftfahrzeugrad sein kann, übertragen wird, kann es unmittelbar nach dem Einschalten des Elektromotors zum Öffnen der Spannmutter kommen. Derartige Spanneinrichtungen sind üblich zur Mittenzentrierung des Rotors an der Hauptwelle.

Aufgabe der Erfindung ist es, eine Vorrichtung der eingangs genannten Art zu schaffen, bei der ein Öffnen bzw. Lockern der Spanneinrichtung unmittelbar nach dem Einschalten des- Elektromotors unterbunden ist.

Diese Aufgabe wird erfindungsgemäß durch die Merkmale des Anspruchs 1 gelöst.

Es hat sich herausgestellt, daß das Öffnen der Spannmutter der Spanneinrichtung auf ein überhöhtes Anzugsmoment beim Einschalten des Elektromotors zurückzuführen ist, welches aus einem für mehrere Netzperioden des Versorgungsstroms anhaltenden Rushmoment (überhöhtes Drehmoment) herrührt, das auf die Hauptwelle der Auswuchtmaschine übertragen wird. Durch die Erfindung wird eine Unterdrückung dieses Rushmoments bzw. überhöhten Anzugsmoments unmittelbar nach dem Einschalten des Elektromotors erzielt.

Das das Rushmoment verringernde Bremsmoment ist zeitgesteuert und kann von einer zeitgesteuerten Bremse vermittelt werden. Hierbei kann es sich um eine hydraulisch betätigte Bremse oder eine Elektromagnetbremse handeln. Bevorzugt wird als Bremse die Betriebsbremse zum Einsatz gebracht, welche zum Stillsetzen der Rotorumdrehung nach einem Meßlauf dient. Es sind dann keine zusätzlichen Bauteile an der Auswuchtmaschine erforderlich.

Die Bremse kann an der Motorwelle des Elektromotors oder an der Hauptwelle angreifen. Bevorzugt wird die Bremse vor dem Einschalten des Elektromotors eingeschaltet und nach dem Abklingen des Rushmoments – etwa 60 msec nach dem Einschalten des Elektromotors – wieder abgeschaltet.

Es wird hierdurch ein sanftes Anlaufen und eine ruckfreie Beschleunigung des zu messenden Rotors auf die Meßdrehzahl erreicht. Das Anlaufen geschieht vibrations- und geräuscharm.

In den beiliegenden Figuren sind Ausführungsbeispiele der Erfindung dargestellt. Es zeigt :

  Fig. 1 ein erstes Ausführungsbeispiel und
  Fig. 2 ein zweites Ausführungsbeispiel.

Ein auszuwuchtender Rotor, welcher bei den dargestellten Ausführungsbeispielen ein Kraftfahrzeugrad 10 ist, ist mit Hilfe einer Spanneinrichtung, welche eine Universalschnellspanneinrichtung sein kann und einen auf eine Hauptwelle 2 einer Auswuchtmaschine zentrisch aufgesetzten Befestigungsflansch 9 und einen Zentrierkonus 15 mit aufgesetzter Spannmutter 6 besitzt, befestigt. Dabei ist eine Felge 8 des Rades 10 am Befestigungsflansch angeschraubt.

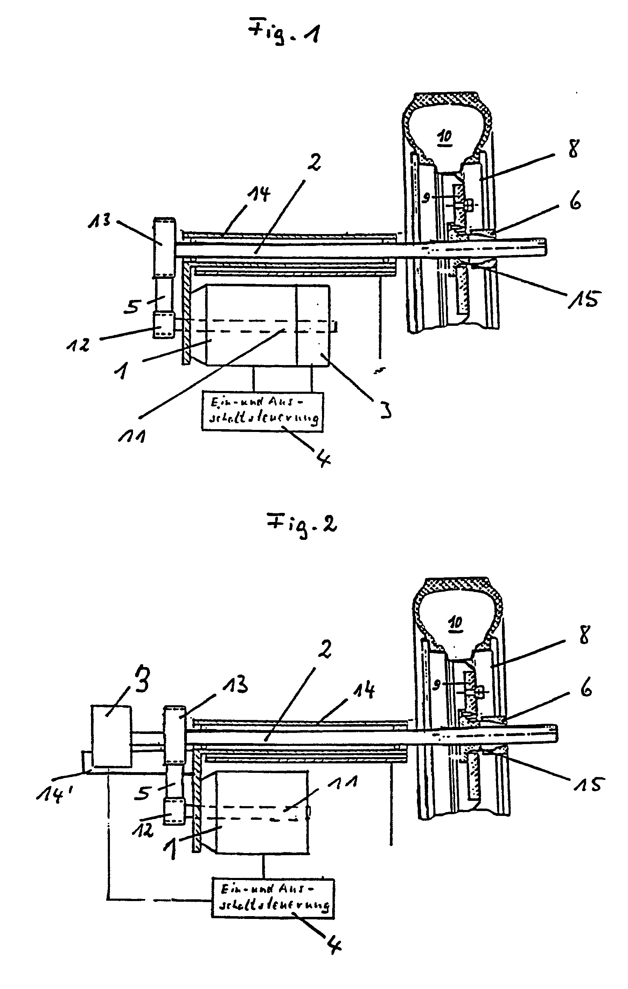

Die Hauptwelle 2 der Auswuchtmaschine wird von einem Elektromotor 1 angetrieben. Das Antriebsdrehmoment des Elektromotors wird von einer Motorwelle 11 über einen Riementrieb, bestehend aus einer auf die Motorwelle aufgesetzten Riemenscheibe 12, einem Riemen 5 und einer auf der Hauptwelle 2 sitzenden Riemenscheibe 13, übertragen. Eine Bremse 3, welche beim dargestellten Ausführungsbeispiel der Fig. 1 am Elektromotorgehäuse 1 angeflanscht ist und auf die Motorwelle 11 wirkt und beim Ausführungsbeispiel der Fig. 2 auf die Hauptwelle 2 wirkt, kann eine herkömmliche Elektromagnetbremse sein, die zum Stillsetzen der Hauptwelle nach dem Meßlauf dient.

Ferner ist mit dem Motor 1 und der Bremse 3 eine Ein- und Ausschaltsteuerung 4 verbunden.

Die Hauptwelle 2 und der Elektromotor 1 sowie die Bremse 3 können an einem gemeinsamen Rahmen 14 gelagert bzw. befestigt sein. Beim Ausführungsbeispiel der Fig. 2 besitzt der Rahmen 14 eine entsprechende Verlängerung 14', an welcher die Bremse 3, welche auf die Hauptwelle 2 wirkt, gelagert ist.

Die Wirkungsweise der in den Figuren 1 und 2 dargestellten Vorrichtungen ist folgende :
Bevor der Meßlauf in Gang gesetzt wird, wird mit Hilfe der Ein- und Ausschaltsteuerung 4 zunächst die Bremse 3 in Betrieb gesetzt. Dann wird durch die Ein- und Ausschaltsteuerung 4 der Motor 1 eingeschaltet. Kurz nach dem Einschalten des Elektromotors 1 nach dem Abklingen des Rushmoments – ca. 60 msec nach dem Einschalten des Elektromotors 1 – wird die Bremse 3 wieder abgeschaltet, und man erzielt ein ruckfreies und vibrations- und geräuscharmes Anlaufen des auszuwuchtenden Kraftfahrzeugrades 10 auf die Meßdrehzahl. Dabei wird ein Lösen der Spannmutter 6 der Spanneinrichtung, mit welcher der Befestigungsflansch unter Zwischenschaltung des Zentrierkonus 15 auf der Hauptwelle 2 befestigt ist, verhindert. Bevorzugt handelt es sich bei der Bremse 3 um die Betriebsbremse, mit welcher nach dem Meßlauf das auszuwuchtende Kraftfahrzeugrad 10 stillgesetzt wird.

## Ansprüche

1. Vorrichtung zum Messen von Unwuchten an Rotoren (10) mit einer von einem Elektromotor (1) angetriebenen Hauptwelle (2), an welcher der auszuwuchtende Rotor (10) mit Hilfe einer Spanneinrichtung (9, 15, 6) befestigt ist, die das vom Elektromotor (1) an die Hauptwelle (2) abgegebene Antriebsdrehmoment mittels Haftreibung auf den auszuwuchtenden Rotor überträgt, dadurch gekennzeichnet, daß das beim Einschalten des Elektromotors (1) auf die Hauptwelle (2) übertragene Anzugs- oder Antriebsdrehmoment durch ein Bremsmoment bis zum Abklingen eines beim Einschalten auftretenden Rushmoments zeitgesteuert verringert ist.

2. Vorrichtung nach Anspruch 1, dadurch gekennzeichnet, daß eine das Bremsmoment vermittelnde zeitgesteuerte Bremse (3) vor dem Einschalten des Elektromotors (1) eingeschaltet ist.

3. Vorrichtung nach Anspruch 1 oder 2, dadurch gekennzeichnet, daß die zeitgesteuerte Bremse (3) etwa 60 msec nach dem Einschalten des Elektromotors (1) abgeschaltet ist.

4. Vorrichtung nach einem der Ansprüche 1 bis 3, bei der das Antriebsdrehmoment von einer Motorwelle über ein Drehmomentübertragungsmittel wie Kupplung oder Riemen auf die Hauptwelle übertragen wird, dadurch gekennzeichnet, daß die Motorwelle (11) mit dem Bremsmoment beaufschlagt ist.

5. Vorrichtung nach einem der Ansprüche 1 bis 3, bei der das Antriebsdrehmoment von einer Motorwelle über ein Drehmomentübertragungsmittel wie Kupplung oder Riemen auf die Hauptwelle übertragen wird, dadurch gekennzeichnet, daß die Hauptwelle (2) mit dem Bremsmoment beaufschlagt ist.

6. Vorrichtung nach einem der Ansprüche 1 bis 5, dadurch gekennzeichnet, daß die Bremse (3) eine Betriebsbremse zum Stillsetzen der Rotorumdrehung nach einem Meßlauf ist.

## Claims

1. Apparatus for measuring unbalances on rotary members (10) comprising a main shaft (2) which is driven by an electric motor (1) and on which the rotary member (10) to be balanced is fixed by means of a clamping arrangement (9, 15, 6) which transmits the drive torque delivered to the main shaft (2) by the electric motor (1) to the rotary member to be balanced, by means of static friction, characterised in that the starting or drive torque which is transmitted to the main shaft (2) when the electric motor (1) is switched on is reduced in a time-controlled manner by a braking moment until a rush moment which occurs when the motor is switched on dies away.

2. Apparatus according to claim 1 characterised in that a time-controlled brake (3) which produces the braking moment is switched on before the electric motor (1) is switched on.

3. Apparatus according to claim 1 or claim 2 characterised in that the time-controlled brake (3) is switched off about 60 msec after the electric motor (1) is switched on.

4. Apparatus according to one of claims 1 to 3 wherein the drive torque is transmitted to the main shaft from a motor shaft by way of a torque transmitting means such as a clutch or belt characterised in that the motor shaft (11) is acted upon by the braking moment.

5. Apparatus according to one of claims 1 to 3 wherein the drive torque is transmitted to the main shaft from a motor shaft by way of a torque transmitting means such as a clutch or belt characterised in that the main shaft (2) is acted upon by the braking moment.

6. Apparatus according to one of claims 1 to 5 characterised in that the brake (3) is an operating brake for stopping the rotary movement of the rotary member after a measuring run.

## Revendications

1. Dispositif de mesure du balourd d'un rotor (10), comprenant un arbre principal (2) qui est entraîné par un moteur électrique (1) et auquel le rotor (10) à équilibrer est fixé à l'aide d'un dispositif de blocage (9, 15, 6) qui transmet par friction au rotor à équilibrer le couple d'entraînement fourni par le moteur électrique (1) à l'arbre principal (2), caractérisé en ce que, lors de la mise sous tension du moteur électrique (1), le couple de serrage ou le couple d'entraînement transmis à l'arbre principal (2) est diminué de manière commandée dans le temps par un couple de freinage jusqu'à annulation d'un couple de pointe apparaissant lors de la mise sous tension.

2. Dispositif selon la revendication 1, caractérisé en ce qu'un frein (3) commandé en fonction du temps et fournissant le couple de freinage est branché avant la mise sous tension du moteur électrique (1).

3. Dispositif selon la revendication 1 ou 2, caractérisé en ce que le frein (3) commandé en fonction du temps est débranché environ 60 millisecondes après la mise sous tension du moteur électrique (1).

4. Dispositif selon l'une des revendications 1 à 3, dans lequel le couple d'entraînement de l'arbre d'un moteur est transmis à l'arbre principal par des moyens de transmission de couple comme un embrayage ou une courroie, caractérisé en ce que le couple de freinage est appliqué à l'arbre du moteur (11).

5. Dispositif selon l'une des revendications 1 à 3, dans lequel le couple d'entraînement de l'arbre d'un moteur est transmis à l'arbre principal par des moyens de transmission du couple, comme un embrayage ou une courroie, caractérisé en ce que le couple de freinage est appliqué à l'arbre principal (2).

6. Dispositif selon l'une des revendications 1 à 5, caractérisé en ce que le frein (3) est un frein de fonctionnement ou de service destiné à faire cesser la rotation du rotor après une mesure.

Fig. 1

Fig. 2

4